# EUROPEAN PATENT SPECIFICATION

(11) **EP 2 343 116 B1**
(45) Date of publication and mention of the grant of the patent: **23.07.2014**
(21) Application number: 11157542.9
(22) Date of filing: 20.04.2007
(51) Int. Cl.: B01J 7/00, B01J 8/18, H01M 8/16, C01B 3/36, C10J 3/46, C10J 3/54, F27B 15/00, F27B 15/14, F27B 15/16

(54) **Fluid bed reactor having a pulse combustor-type heat transfer module**
Wirbelbettreaktor mit pulsbrennerartigem Wärmeübertragungsmodul
Réacteur à lit fluidisé doté d'un module de transfert de type chambre de combustion pulsatoire

(30) Priority: 24.04.2006 US 409837; 08.05.2006 US 429917
(43) Date of publication of application: 13.07.2011
(62) Divisional of application: 07761021.0
(73) Proprietor: ThermoChem Recovery International, Inc., Baltimore, MD 21227 (US)
(72) Inventor: Chandran, Ravi, Ellicott City, MD 21042 (US)
(74) Representative: Andrae | Westendorp Patentanwälte Partnerschaft

(56) References cited:
- US-A- 5 059 404
- US-A- 5 064 444
- US-A- 5 637 192

## Description

### FIELD OF THE INVENTION

The present invention relates to a fluid bed reactor configured to thermoshemically or biochemically process a reactive material, which may include inorganic materials, and also carbonaceous materials, such as black liquor and biomass, to process and/or recycle materials and extract energy, the reactor being of the kind defined in the pre-characterizing part of claim 1. The invention also relates to a method of thermochemically or biochemically processing a reactive material to form a product, the method being of the kind defined in the pre-characterizing part of claim 8.

### BACKGROUND OF THE INVENTION

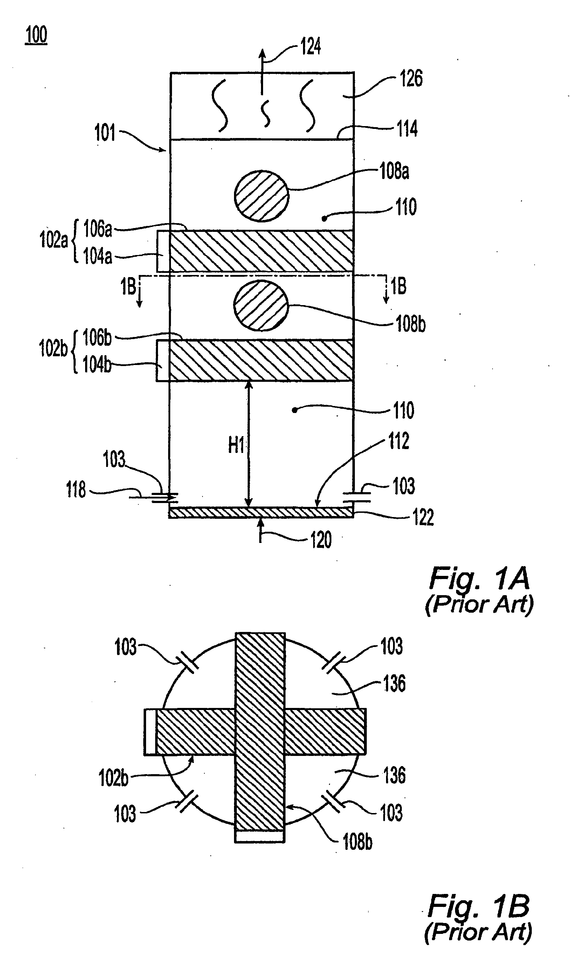

Figures 1A and 1B show top and side views, respectively, of a prior art reactor, configured as a cylindrical reformer 100. The cylindrical reformer 100 includes a cylindrical compartment 101 forming a reaction vessel. The reformer 100 comprises one or more pulse heaters 102A, 102B, each of which comprises a pulse combustor 104A, 104B connected to a respective resonance tube 146A, 106B. As seen in Fig. 1A, the pulse heaters 102A, 102B extend in one direction across the diameter of the cylinder. Air and fuel products enter the pulse combustors 104A, 104B and the combustion products or flue gas exit the resonance tubes 106A, 106B.

The pulse heaters 102A, 102B are of the sort disclosed in U.S. Patent No. 5,059,404, whose contents are incorporated by reference to the extent necessary to understand the present invention. Such pulse heaters are configured to indirectly heat fluids and solids introduced into a reformer reaction vessel 101. The resonance tubes 106A, 106B associated with the pulse heaters 102A, 102B serve as heating conduits for indirectly heating contents of the compartment 101.

As seen in Figs. 1A and 1B, a second pair of pulse heaters 108A, 108B are directed at right angles to the first pair of pulse heaters 102A, 102B across the diameter of the compartment. As seen in Fig. 1B, this leaves vertically extending quadrants 136 within the compartment 101 in regions defined by the crossing pulse heaters.

The pulse heaters are immersed in a dense fluid bed 110, which extends from the compartment bottom 112 to approximately the top bed line 114. The bottommost pulse heater 102B is located at a height H1 meters above the distributor 122 to avoid painting the resonance tubes 104B with liquor 118. In some prior art systems, the height H1 is about 2-3 meters.

Spent liquor 118 is injected into the side of the compartment 101 near the bottom of the dense fluid bed 110. Generally speaking, the spent liquor is introduced into the compartment via a plurality of inlets 103 that are circumferentially arranged around the cylindrical compartment 101. Though in Fig. 1B, only four such inlets 103 are shown, it is understood that other numbers of circumferentially arranged inlets may be provided. In other prior art embodiments, the spent liquor may be introduced through the bottom of the compartment 101 through a plurality of inlets more or less evenly distributed across the bottom, perhaps arranged in an array or other pattern.

Superheated steam 120, or other fluidization medium, enters from the bottom of the compartment 101 and passes through a distributor 122. The distributor 122 helps uniformly spread the entering steam 120, which then percolates through the dense fluid bed 110. Product gas 124 leaves from a freeboard area 126 at the top of the compartment 101 after passing through one or more internal cyclones (not shown) used to help drop out entrained bed solids.

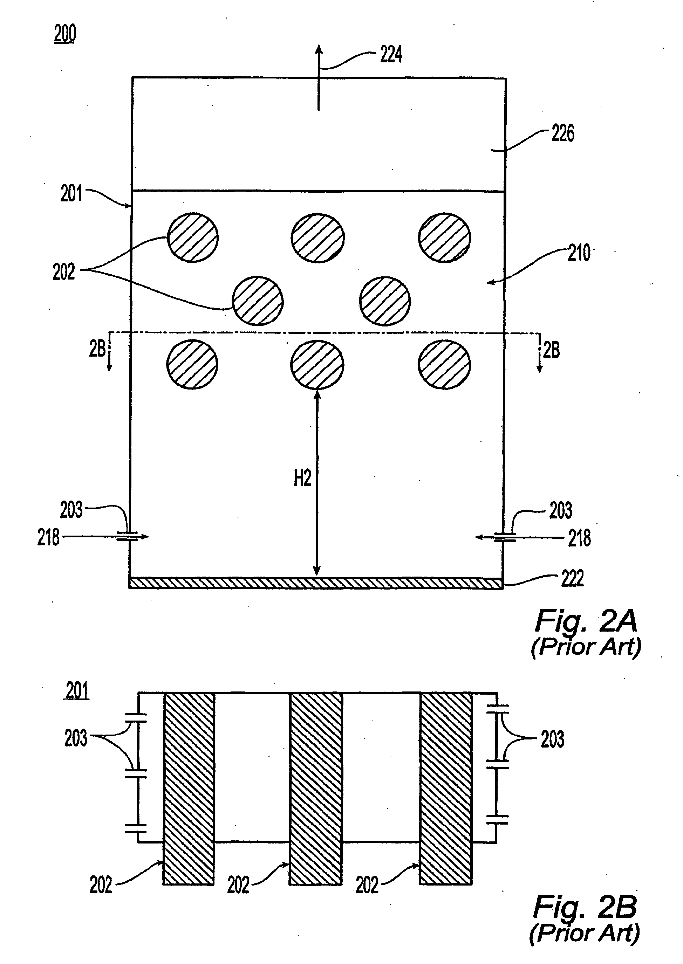

Figs. 2A and 2B show an alternative prior art configuration in the form of a rectangular reformer 200. The rectangular reformer 200 has a compartment 201 with a rectangular cross-section as seen from above (See Fig. 2B). A plurality of pulse heaters 102 arranged in one or more rows pass through this compartment 201. The rows are staggered relative to each other to enhance heat transfer. Each of these pulse heaters 102 comprises a heating conduit in the form of a resonance tube for indirectly heating the contents of the compartment 201.

A distributor 222 is provided at the bottom of the compartment 201, much like in the cylindrical reformer 100. The bottommost pulse heaters 202 are located at a height H2 above the distributor 222. In some prior art systems, this height H2 is again about 2 -3 meters. Moreover, just as in the case with the cylindrical reformer, spent liquor 218 is introduced into the side of the compartment 201 near its bottom. Generally speaking, the spent liquor is introduced into the compartment via a plurality of inlets 203 that are arranged along the walls around the rectangular compartment 201. In other prior art embodiments, the spent liquor may be introduced through the bottom of the compartment 201 through a plurality of inlets more or less evenly distributed across the bottom, perhaps arranged in an array or other pattern. Meanwhile, product gas 224 leaves from a freeboard area 226 at the top of the compartment 201. It is understood that the operation of the rectangular reformer 200 is similar to that of the cylindrical reformer 100 described above, in most material respects.

The above arrangements appear to work satisfactorily in small process development scale units. However, they can encounter certain limitations when they are scaled up to larger units.

One issue is the presence of open quadrants (see Fig. 1B) where there are no tubes, or there is free space between pulse heaters bundles (See Fig. 2B), both of which may encourage steam/gas channeling and steam/gas bypassing, thus impairing gas-solid contact and solid circulation rate. Furthermore, the presence of such large vertical channels promotes the formation of large gas bubbles, which, by virtue of rapid increase in size and speed, may damage pipes, tubes, connections and other fixtures within the reformer.

Another issue is that a reduced solids circulation rate leads to longer particle contact times on the resonance tube surface. This hampers particle convection and, in turn, the heat transfer from the tubes. Consequently, the tubes tend to run hotter and this adversely affects the rate at which heat is dumped into the bed and increases the combustion flue gas exit temperature from the pulse heaters 102A, 102B, 202. Additionally, there is a greater propensity for local hot spots, which may lead to smelt formation and/or particle agglomeration and fouling or buildup around a few or many tubes.

Yet another limitation may be that the close coupling of the combustion chamber with the resonance tubes makes it necessary to minimize tube-to-tube spacing, or pitch, and, in turn, the gap between the resonance tubes. This is done to facilitate a reasonable aspect ratio (length to diameter) for the combustion chamber. And since the pulse heater is typically designed as a Helmholtz resonator, it must preserve certain geometric proportions (resonance tube length, resonance tube volume and combustion chamber volume). Experimental data and models for fluidized bed-tube heat transfer indicate significant improvement in heat transfer coefficient with an increase in the pitch or gap between tubes in a tube bundle. This is due to reduced resistance for solids movement with increasing space between tubes, which promotes more frequent surface renewal or particle convection and, in turn, greater heat transfer coefficient. However, the arrangements seen in Fig. 1B limits the gap between tubes to a value that is much lower than optimum from fluid bed heat transfer and operability standpoints.

Furthermore, a majority of combustion and heat release occurs in the pulse combustion chamber. However, combustion continues in the resonance tube albeit at a lower rate due to the lower temperature of the gases in the resonance tube. Residual combustion and heat release in the resonance tube is desirable from a heat transfer standpoint, but unsatisfactory if the combustion is incomplete and gives rise to significant concentrations of CO and unburned hydrocarbons in the exhaust flue gas. The probability of this outcome increases as the fuel-firing rate in the combustor decreases from the design-firing rate.

In addition, upon injection into the fluid bed 110, the carbonaceous feedstock undergoes drying, devolatilization, char formation and char conversion. In a steam reforming environment, all of these processes are endothermic i.e. require heat input. The greater the bed solids circulation rate and the more uniform the distribution of the feedstock across the bed, the faster the heating rate and the higher the final temperature of the feedstock. This enhances thermal decomposition of organic matter, leads to higher volatile yield and lower tar formation, and char yield. With a fluid bed-pulse heater configuration that encourages gas/steam channeling and bypassing, the solids circulation rate is hampered. This impedes heat transport to the feedstock injection zone, depresses temperature in this zone and promotes tar and char formation.

Yet another issue is that drying, devolatilization, char formation and char conversion processes all compete for heat transfer and mass transfer in the region that is above the distributor 122, 222 but below the bottom pulse heater. All these processes are heat sinks and the entering fluidization medium 120 may be another heat sink if it is steam and is at a temperature below that of the fluid bed. The only heat sources are the pulse heaters and these are significantly removed from the heat sinks by the aforementioned distances H1 and H2 in the prior art embodiments described above. The only link is the solids circulation rate and if this is not up to par, the feedstock injection region starves for heat and the reactor performance suffers.

In addition, both heat transfer and mass transfer are important for satisfactory char conversion. The higher the char temperature and the reactant or steam concentration, the greater the char conversion rate. The region just above the distributor is characterized by high steam or reactant concentration, which is favorable for char conversion, provided the char temperature could be maintained at the fluid bed temperature. Due to feedstock injection and reduced solids circulation rate, the heat supply is limited which is likely to depress the char temperature and in turn the char conversion rate. In the region of the pulse heaters, the heat transfer is good but the mass transfer may be unsatisfactory if the reactant (steam) bypasses due to channeling, again impairing char conversion.

Commercial units generally require deep or tall dense fluidized beds to accommodate the large number of heat transfer tubes. Operating these units in bubbling fluidization regime is rather limiting from heat and mass transfer and gas/solid contact standpoints due to the relatively large bubbles, increased bubble coalescence and the propensity for steam/gas bypassing. Conversely, operation in the turbulent fluidization regime affords good gas/solid contact and excellent heat and mass transfer characteristics. This, however, requires a significantly higher superficial fluidization velocity than that for the bubbling regime. One feasible approach is to select a different heat exchanger configuration and a smaller bed material mean particle size.

In summary, the above-described prior-art configurations afford modularity and are beneficial for certain classes of size or feedstock capacity. However this approach becomes unwieldy for large scale or high feedstock throughput units due to the large number of pulse heaters required, the complexity of interconnections, piping, ducting, etc. and the cost. All of this constrains scale-up.

A fluid bed reactor of the kind defined in the pre-characterizing part of claim 1 and a method of the kind defined in the pre-characterizing part of claim 8 are disclosed in US 5 064 444 A. The fluid bed reactor disclosed by the afore mentioned US patent comprises a pressure vessel having a single continuous heat exchanger. The heat exchanger includes upper heat exchange tubes and lower heat exchange tubes connected by a pipe. Thus the same moieties of heat transfer medium entering the tank at an inlet and exiting the tank at an outlet pass first through the lower heat exchange tubes and then pass through the upper heat exchange tubes, after passing through the connecting pipe. The gas temperature in the continuous heat exchanger differs from zone to the next, and this, in turn, affects the amount of heat transferred in one zone as compared to the next. This is because the heat transfer medium is hotter in the gasification zone where it first entered the vessel at the inlet and flowed through the lower heat exchange tubes than when it was flowing through the upper heat exchange tubes in the pyrolisis zone before exiting the vessel at the outlet.

US 5 637 192 A discloses a fluid bed reactor which is indirectly heated by a single pulse combustor having one or more resonant tubes that are immersed in a bed of solid particles in a reaction zone to provide indirect heat from the pulsating gases to the solid particles of the bed. The resonant tubes of the pulse combustor extend parallel in a vertical direction over the entire height of the reactor.

### SUMMARY OF THE INVENTION

In one aspect, the invention is directed to a fluid bed reactor configured to thermochemically or biochemically process a reactive material, the reactor comprising:
a reaction vessel defining a compartment suitable for receiving a reactive material;
a first cluster of heating conduits at least partially occupying said compartment and extending over a first vertical extent within the compartment, each heating conduit in the first cluster configured to transfer heat from a heat source to the compartment, the heating conduits in the first cluster having a first thickness;
a second cluster of heating conduits at least partially occupying said compartment and extending over a second vertical extent within the compartment, each heating conduit in the second cluster configured to transfer heat from a heat source to the compartment, the heating conduits in the second cluster having a second thickness, the second cluster of heating conduits being positioned vertically above the first cluster of heating conduits and spaced apart therefrom by a first separation distance, the first separation distance being at least as large as the smaller of the first and second thicknesses, the first separation distance defining a zone in the reaction vessel between the first cluster and the second cluster that is configured to be conducive to good solids circulation; and
a plurality of feedstock inlets configured to introduce a reactive material into the reaction vessel in a region that is vertically between the first and second clusters of heating conduits;
characterized in that each heating conduit of said first and second clusters is a resonance tube of a respective one of a plurality of pulse heaters, or electric heaters are within the heating conduits.

In another aspect, the invention is directed to a method of thermochemically or biochemically processing a reactive material to form a product, the method comprising:
providing a fluid bed reactor comprising:
   a reaction vessel defining a compartment suitable for receiving a reactive material;
   a first cluster of heating conduits at least partially occupying said compartment and extending over a first vertical extent within the compartment, each heating conduit in the first cluster configured to transfer heat from a heat source to the compartment, the heating conduits in the first cluster having a first thickness; and
   a second cluster of heating conduits at least partially occupying said compartment and extending over a second vertical extent within the compartment, each heating conduit in the second cluster configured to transfer heat from a heat source to the compartment, the heating conduits in the second cluster having a second thickness, the second cluster of heating conduits being positioned vertically above the first cluster of heating conduits and spaced apart therefrom by a first separation distance, the first separation distance being at least as large as the smaller of the first and second thicknesses, the first separation distance defining a zone in the reaction vessel between the first cluster and the second cluster that is configured to be conducive to good solids circulation;
   introducing a fluidization medium into the compartment;
   introducing reactive material into the compartment in a region that is vertically between the first and second clusters of heating conduits; and
   controlling a reaction in the reaction vessel such that at least a portion of the reactive material is converted into one or more products in a fluidized bed;
   characterized by
   providing the reaction vessel with a plurality of pulse heaters, each pulse heater including a resonance tube which serves as a respective one of said heating conduits; and wherein
   controlling a reaction in the reaction vessel comprises controlling operation of said pulse heaters.

### BRIEF DESCRIPTION OF THE DRAWINGS

For a better understanding of the present invention and to show how the same may be carried out in practice, reference will now be made to the accompanying drawings, in which:
Figs. 1A and 1B show side and top views, respectively, of a prior art cylindrical reformer.
Figs. 2A and 2B show side and top views, respectively, of a prior art rectangular reformer.
Figs. 3A, 3B & 3C show side, side cutaway and top cutaway views, respectively, of a device not forming part of the invention.
Fig. 4A shows a cutaway partial cross-sectional view of a first embodiment of the wall of the reformer vessel of Figs. 3A, 3B and 3C.
Fig. 4B shows a cross-section of Fig. 4A along lines 4B-4B.
Fig. 4C shows a cross-section of Fig. 4A along lines 4C-4C.
Fig. 4D shows a cross-section of Fig. 4C along lines 4D-4D.
Fig. 5A shows a cutaway partial cross-sectional view of a second embodiment of the wall of the reformer vessel of Figs. 3A, 3B and 3C.
Fig. 5B shows a cross-section of Fig. 5A along lines 5B-5B.
Fig. 5C shows a cross-section of Fig. 5A along lines 5C-5C.
Fig. 6A shows a side view of a reactor in accordance with one embodiment of the present invention.
Fig. 6B shows a top cross-sectional view of the reactor of Fig. 6A taken along lines 6B-6B.

### DETAILED DESCRIPTION OF PREFERRED EMBODIMENTS

The contents of U.S. Patent Nos. 5,059,404; 5,306,481; 5,353,721; 5,536,488; 5,637,192 and 6,149,765 are incorporated by reference to the extent necessary to understand the present invention.

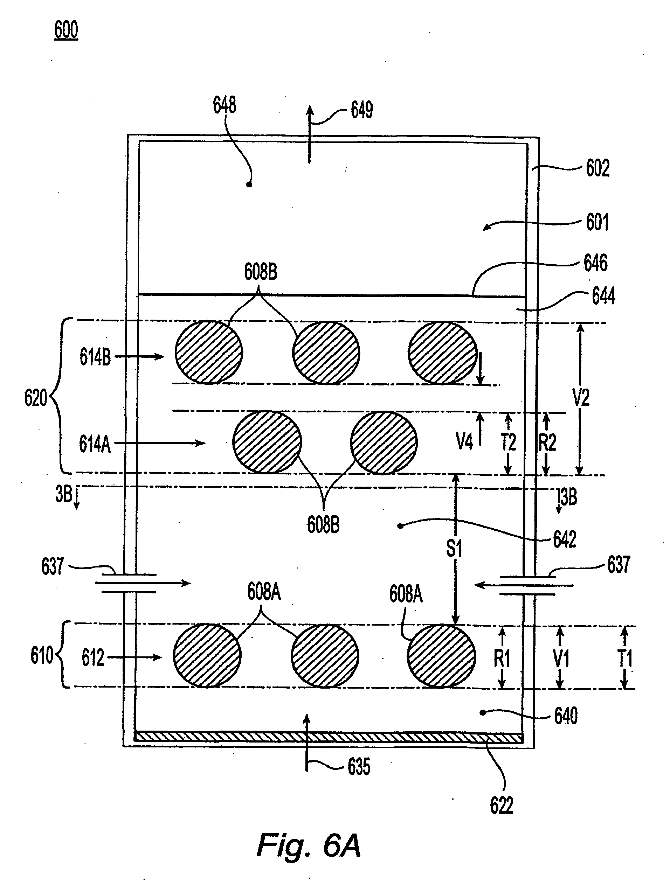

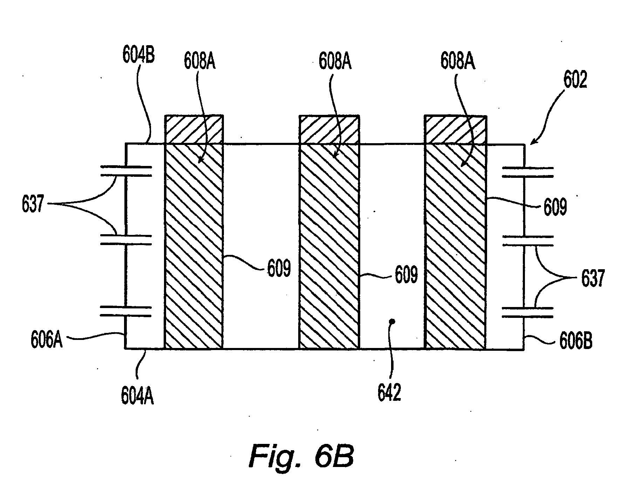

Figs. 6A and 6B show views of a fluid bed reformer 600 having vertically spaced apart clusters of heating conduits with feedstock being injected between the spaced apart clusters. Fluid bed reformer 600 comprises a compartment 601 serving as a reaction vessel 602. As best seen in Fig. 6B, the reaction vessel 602 has a rectangular footprint (i.e., a rectangular shape in a horizontal cross-section) comprising two long sides 604A, 604B and two short sides 606A, 606B. A plurality of pulse heaters 608A, 608B pass through the long sides 604A, 604B of the reformer vessel 600. In one embodiment, the pulse heaters 608A, 608B are of a sort well known to those skilled in the art, such as those disclosed in U.S. Patent No. 5,059,404, mentioned above. The resonance tubes 609 associated with these pulse heaters 608A, 608B serve as heating conduits for indirectly heating contents of the compartment 601.

The pulse heaters 608A, 608B are organized into two vertically spaced-apart clusters, a first, or lower, cluster 610 and a second, or upper, cluster 620. In the embodiment shown, each cluster 610, 620 comprises one or more rows of pulse heaters. It is understood, however, that the pulse heaters within a cluster are not required to be arranged in rows, to be in accordance with the present invention.

As seen in the embodiment of Fig. 6A, the pulse heaters 608A belonging to the lower cluster 610 are arranged in a single, horizontal row 612. Since it is the only row, row 612 serves as both the uppermost row 612 and as the lowermost row 612 of lower cluster 610. The vertical extent V1 of the lower cluster 610 is therefore commensurate with the row height R1. In this instance, the row height R1 corresponds to the thickness T1 of a pulse heater 608A belonging to this row 612 (or, more precisely, the thickness T1 of a heating conduit 609 associated with the pulse heater 608A). Therefore, in the case of a cylindrical heating conduit that is arranged horizontally, R1 is simply the heating conduit diameter. While three pulse heaters are shown in this row 612, it is understood that a row may have a different number of pulse heaters instead.

The pulse heaters 608B belonging to the upper cluster 620 are arranged in a pair of horizontal rows 614A, 614B. In the embodiment shown, the rows 614A, 614B of the upper cluster 620 are staggered relative to one another and are vertically spaced apart from each other by an intra-row spacing of V4. The upper cluster 620 has a vertical extent V2 which is greater than the vertical extent of V1 of the lower cluster 610, due to the presence of two rows 614A, 614B in upper cluster 620, rather than the single row 612 in the lower cluster 610. The lowermost row 614A of the second cluster 602 has a row height R2 which, in the embodiment shown, corresponds to the thickness T2 of the heating conduit associated with the corresponding pulse heaters 608B. When the same types of heating conduits/pulse heaters are used in both clusters 610, 620, the row height R2 of lowermost row 614A of the upper cluster 620 is the same as the row height R1 of the uppermost row 612 of the lower cluster 610.

As seen in Fig. 6A, the first and second clusters 610, 620 are spaced apart by an inter-cluster vertical spacing S1.

In one embodiment, the clusters 610, 620 are spaced sufficiently far apart so that the vertical spacing S1 is at least as large as the smaller of the heating conduit thicknesses T1 and T2. When heating conduits in a given cluster have differing thicknesses, then the average heating conduit thickness for that cluster is used as the 'heating conduit thickness' for purpose of determining the minimum vertical spacing S 1.

In other embodiments, the vertical spacing S1 is at least as large as the smaller of the two vertical extents V1, V2 (i.e., S1 ≥ min (V1, V2)).

In still other embodiments, the vertical spacing S1 is at least twice as large as the smaller of the two vertical extents V1, V2 (i.e., S1 ≥ 2* min (V1, V2)).

In the foregoing description of the clusters 610, 620, the pulse heaters 608A, 608B in each cluster were arranged in horizontal rows, and so the row heights R1, R2 were the same as the heating conduit thicknesses T1, T2. It is understood, however, that in other embodiments, the pulse heaters may not be arranged in horizontal rows, but instead may be tilted, or angled, from one wall 604A to the opposite wall 604B. In such case, the row heights would not be the same as the heating conduit thicknesses. It is understood that in still other embodiments, the pulse heaters may not even be arranged in rows at all. In all of these instances, however, the vertical spacing S1 would still be at least as large as the smaller of the heating conduit thicknesses T1 and T2.

Also, while the first and second clusters 610, 620, respectively, are shown to have an unequal number of rows, it is understood that in some embodiments the two clusters may have an equal numbers of rows, and that this equal number may be 1, 2, 3, or even more. It is further understood that while in the embodiment of Figs. 6A-6B, the rows 614A, 614B of the second cluster 620 have unequal numbers of pulse heaters 608B, adjacent rows within a cluster may instead have equal numbers of pulse heaters 608B. Thus, for example, rows 614A, 614B of second cluster 620 may each have three pulse heaters 608B, the rows still being staggered relative to one another.

The total number of rows and the total number of pulse heaters 608A, 608B in each row can be modified in any given design to suit the size, feedstock type and feedstock throughput of the steam reformer 600.

At the bottom of the reformer vessel 602 is a distributor 622 into which a fluidization medium 635, such as steam, is introduced. Just above the distributor 622 and below the first cluster 610 is an enhanced char conversion zone 640. The zone 640 provides for good heat and mass transfer and high reactant (steam) concentration and facilitates enhanced char conversion. The vertical extent of this zone 640 will depend upon the char reactivity and the reformer operating conditions with the slower the reaction(s) the greater the vertical extent.

Between the first cluster 610 and the second cluster 620 is a drying and devolatilization zone 642 with height S1, as previously discussed. This zone is conducive to good solids circulation, heat transport and gas-solid contact and serves to maximize drying and devolatilization and minimize tar and char formation. In one embodiment, feedstock inlets, shown generally as 637, terminate in a region that is vertically between the two clusters 610, 620. Thus, in this embodiment, feedstock is injected into zone 642, which is separated from the primary char reaction zone 640, at a position vertically above the first cluster of pulse heaters and vertically below the second cluster 620 of pulse heaters. It is understood that the feedstock inlets 637 are approximately at the same height and spaced apart along the short sides 606A, 606B of the reformer vessel 602.

Finally, in the region just above the second cluster 620 is a dense bed region 644, which extends to the top bed line 646. A freeboard region 648 occupies the topmost portion of the reformer vessel 602. Product gas 649 exits from the freeboard region 648 via cyclones and other equipment (not shown) known to those skilled in the art.

It is understood that the pulse heaters 608A, 608B of the fluid reformer 600 are under computer control (not shown) so as to vary the firing rate and heat transfer rate to better match the load in the fluid reformer 600 and also enhance reformer turndown.

It can be seen from the foregoing that in many respects, the fluid reformer 600 of Figs. 6A and 6B is similar to the prior art fluid reformer 200 seen in Fig. 2. One principal difference, however, is that the pulse heaters 608A, 608B in fluid reformer 600 are arranged into spaced apart clusters 610, 620, whereas the pulse heaters in the prior art fluid reformer 200 all belong to a single cluster. A second difference is that, in some embodiments, the feedstock is introduced into the compartment 602 in a region that is above the lowest pulse heaters and, in one embodiment, is introduced in a region that is between the two clusters 610,620.

Operation of the fluid bed reformer to create a product gas from a carbonaceous material begins with an apparatus of the sort described above. This is followed by introducing a fluidization medium in the compartment, introducing a carbonaceous material into the compartment in a region that is vertically between the first and second clusters, and then controlling a reaction in the reaction vessel such that at least a portion of the carbonaceous material is converted into a product gas in a fluidized bed.

People of ordinary skill in the art are familiar with various aspects of controlling the reaction, such as reactant flows, temperature and pressure monitoring, and the like. In those situations where pulse heaters are used, such control entails operation of the pulse heaters, including adjusting their firing rate, air-fuel mix, and other parameters. The reformer may be configured to operate in a turbulent fluidization regime, and the fluidization medium may consist of one from the group of steam, air, enriched air, oxygen, nitrogen, carbon dioxide, recycle product gas, and mixtures thereof.

While the above description of the reformer 600 contemplates a fluidized bed reformer having a rectangular footprint, it is possible to implement the present invention in reformers having other shapes, as well. Thus, for example, a reformer with a square footprint or a cylindrical footprint may benefit from the present invention, so long as sufficient vertical spacing between the pulse heaters and inlets are provided to introduce the feedstock into this region between clusters of pulse heaters.

In addition, the description above was couched in terms of using pulse heaters as the source of indirect heat provided by the heating conduits. It is understood, however, that the above-described reactor may employ sources other than pulse heaters to produce the heat that is indirectly supplied via the heating conduits 609. Examples of such other sources include electric heaters within the heating conduits, fire tubes, and the like

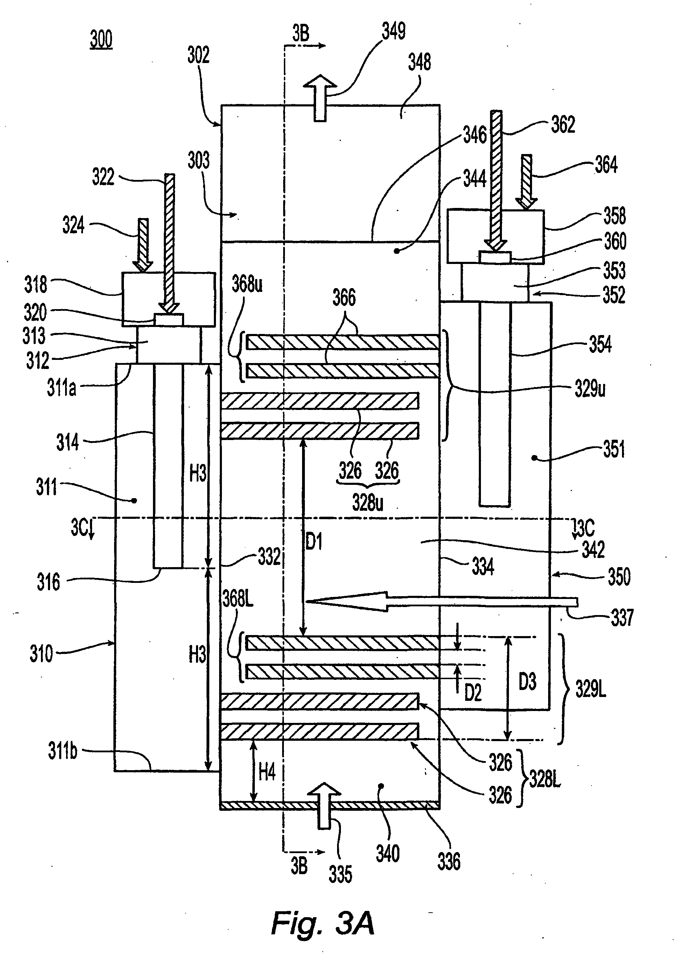

Fig. 3A shows a side view of a reactor 300 not forming part of the invention. In the description that follows, the reactor is assumed to be a reformer 300. The reformer 300 comprises a reformer vessel 302 and a pair of heat transfer modules 310, 350, one on either side of the reformer vessel 302. The reformer vessel 302 defines a compartment 303 configured to receive a fluidizable carbonaceous material. As seen in Fig. 3A, two heat transfer modules are vertically offset relative to another. In the embodiment shown, the second heat transfer module 350 is at a slightly higher position than the first heat transfer module 310.

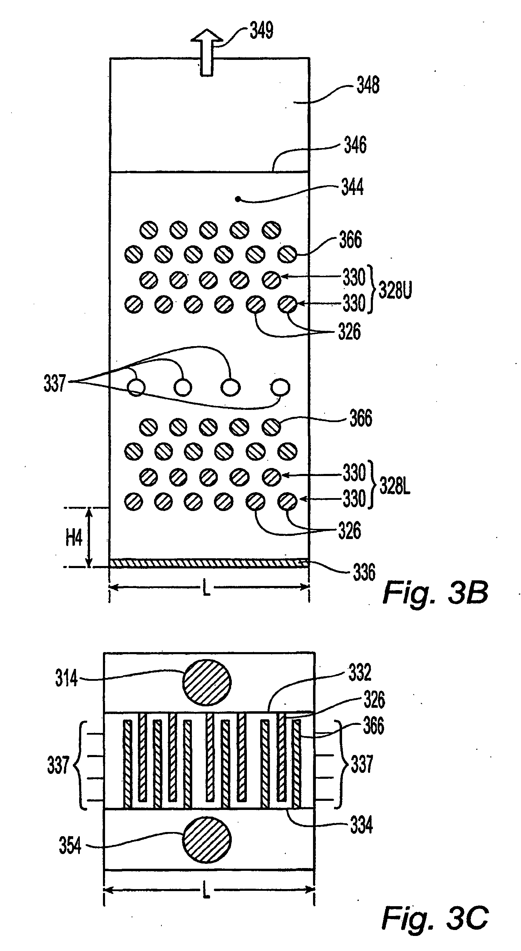

The first heat transfer module 310 includes a first acoustic chamber 311 and a first pulse combustor 312. The first pulse combustor 312 includes a pulse combustion chamber 313 connected to a tail pipe 314. As seen in the embodiment of Fig. 3, the pulse combustion chamber 313 is positioned atop the first acoustic chamber 311. Meanwhile, the tail pipe 314 is substantially entirely within the first acoustic chamber 311 and extends in a vertically downward direction therein. As also seen in this embodiment, the tailpipe exit 316 is positioned about half-way along the vertical extent of the acoustic chamber 311, which has a height of 2 x H3. This allows for the first acoustic chamber 311 to resonate upon activation of the first pulse combustor 312 and result in a standing wave in the acoustic chamber.

Sitting atop the pulse combustion chamber 313 is an air plenum 318, which surrounds a valve 320. The valve may comprise a single valve, or may comprise a multiple valve 320. The valve 320 provides a gateway to the inlet of the pulse combustion chamber 313, and thus permits combustibles 322 such as fuel and/or product gas, and air 324, to enter the latter. The air 324 may enter the air plenum 318 and mix with the combustibles 322 proximate the exit of the valve 320 before being injected into the pulse combustion chamber 313.

The combustion products exiting the end 316 of the tail pipe 314 into the first acoustic chamber 311 pass through openings formed in a first wall 332 of the reformer vessel 302 and enter into a plurality of heat transfer tubes 326 connected to the first wall 332. The heat transfer tubes 326 belong to either a first upper heat transfer tube bundle 328U or a first lower heat transfer tube bundle 328L. The first upper and lower heat transfer tube bundles 328U, 328L protrude into the reformer vessel 302 where heat is imparted into the fluid therein.

Each bundle 328U, 328L, 368U, 368L comprises a plurality of heat transfer tubes. As seen in Fig. 3B, each bundle 328U, 328L may comprise a plurality of rows 330 of tubes 326. The rows 330 belonging to a single bundle preferably are staggered, as shown in Fig. 3B, though they may simply be vertically aligned with each other. Each row 330 may comprise a plurality of tubes 326, the exact number being limited by the tube diameter, tube spacing and the length L of the vessel wall 332 to which the tubes 326 are connected.

The total number of rows and the total number of heat transfer tubes 326 can be modified in any given design to suit the size, feedstock type and feedstock throughput of the steam reformer. Once these parameters are known, the first pulse combustor 312 and the first acoustic chamber 311 can be designed to match the heat transfer duty. Since the number of rows and number of columns may be varied, a reformer such as reformer 300 may be scaled from small to large sizes. Regardless of the overall size, the heat transfer tubes 326 can be configured arranged within the reformer vessel 302 to help promote gas-solid contact and mitigate gas/steam channeling and bypassing.

In the reformer 300, the first pulse combustor 312 is thus physically separated from the heat transfer tubes 326, but functionally coupled via the first acoustic chamber 311. The first acoustic chamber 311 completely encloses the tailpipe 314, with the tailpipe exit 316 located near the geometric center of the acoustic chamber. With the first pulse combustor 312 designed as a Helmholtz and quarter wave resonator, the tailpipe exit 316 corresponds to a velocity anti-node, or pressure node. The first acoustic chamber 311 is configured to serve as a standing wave generator with pressure anti-nodes, or velocity nodes, at its ends 311A, 3118.

The two bundles of heat transfer tubes 328U, 328L are positioned such that the upper bundle 328U is near the pressure anti-node at the top 311 A of the first acoustic chamber 311, while the lower bundle 328L is near the pressure anti-node at the bottom 311B of the first acoustic chamber 311. This facilitates efficient transfer of the acoustics from the first pulse combustor 312 to the heat transfer tubes 326 of the first upper and lower bundles 328U, 328L. It also provides for periodic boundary layer scrubbing and enhancement in heat transfer coefficient

As seen in Fig. 3A, the upper bundles 328U, 368U constitute an upper bundle cluster 329U, while the lower bundles 328L, 368L constitute a lower bundle cluster 329L. The lowermost member of the upper bundle cluster 329U is spaced apart from the uppermost member of the lower bundle cluster 329L by an inter-cluster vertical spacing D1. The inter-cluster vertical spacing D1 substantially exceeds the inter-row vertical spacing D2, which is the spacing between rows within the bundles. In one embodiment, the ratio of the inter-cluster vertical spacing D1 to the inter-row vertical spacing D2, D1/D2, is greater than or equal to 2. In some embodiments, the inter-cluster vertical spacing D1 also exceeds the maximum cluster height D3 of either the upper bundle cluster 329U or the lower bundle cluster 329L, it being understood that the clusters are not required to have the same height, or the same number of rows. In one embodiment, the ratio of the inter-cluster vertical spacing D1 to the maximum cluster height D3, D1/D3, is greater than or equal to 2. The lower and upper clusters 329L and 329U are all immersed within the dense bed 342.

The second heat transfer module 350 includes a second acoustic chamber 351 and a second pulse combustor 352. The construction of the second pulse combustor 352 is similar to that of the first pulse combustor 312. The second pulse combustor 352 thus comprises a pulse combustion chamber 353 connected to a tail pipe 354. An air plenum 358 and valve 360 associated with the second pulse combustor 352 for the introduction of combustibles 362 and air 364 are also provided.

The combustion products exiting the tail pipe 354 into the second acoustic chamber 351 pass through openings formed in a second wall 334 of the reformer vessel 302 and enter into a plurality of heat transfer tubes 366 connected to the second wall 334. The heat transfer tubes 366, which preferably are of the same construction as heat transfer tubes 326, belong to either a second upper heat transfer tube bundle 368U or a second lower heat transfer tube bundle 368L.

The compartment 303 of the reformer vessel 302 includes a number of vertically spaced apart regions having different functional roles and in which various activities take place.

At the bottom of the reformer vessel 302 is a distributor 336 into which a fluidization medium 335, such as steam, is introduced. The bottommost heat transfer tube 326 is located closer to the distributor 336 to facilitate good communication between the heat source and the heat sink. In one embodiment, the spacing H4 (see Fig. 3B) between the distributor 336 and the bottom most heat transfer tube 326 is between 0.5 - 1.5 meters. However, other spacings are possible as well.

The region above the distributor 336 and below the top of the lower bundles 328L, 368L is termed the enhanced char conversion zone 340. The zone 340 provides for good heat and mass transfer and high reactant (steam) concentration and facilitates enhanced char conversion. The vertical extent of this zone will depend upon the char reactivity and the reformer operating conditions with the slower the reaction(s) the greater the vertical extent.

Between the lower bundles 328L, 368L and the upper bundles 328U, 368U is a drying and devolatilization zone 342 with height D1, as previously discussed. This zone is conducive to good solids circulation, heat transport and gas-solid contact, serves to maximize drying and devolatilization and minimizes tar and char formation. In one embodiment, a feedstock inlet, shown generally as arrow 337 terminates in a region vertically between the lower heat transfer bundles 328L, 368L and the upper heat transfer bundles 328U, 268U. Thus, in this embodiment, feedstock is injected into zone 342, which is separated from the primary char reaction zone 340, at a position vertically above the lower heat transfer bundles 328L, 368L and below the upper heat transfer bundles 328U, 268U. Although only a single feedstock inlet 337 is shown, it is understood that this feedstock inlet 337 is intended to represent a plurality of such inlets. This plurality of inlets are all approximately at the same height and are spaced apart along the exposed sides of the vessel 302 that are not in abutment with the acoustic chambers 311, 351, as best seen in Figs. 3B and 3C.

Finally, in the region just above the upper bundles 328U, 368U is a dense bed region 344, which extends to the top dense bed line 346. A freeboard region 348 occupies the topmost portion of the reformer vessel 302. Product gas 349 exits from the topboard region 348 via cyclones and other equipment (not shown) known to those skilled in the art.

In the embodiment shown, reformer 300 has two heat transfer modules 310, 350, each with an acoustic chamber 311, 351 and an associated pulse combustor 312, 352. During operation, the two heat transfer modules 310, 350 are under computer control to vary the firing rate and heat transfer rate to better match the load in the reformer 300 and enhance reformer turndown.

In the pulse combustors 312 and 352, the combustion stoichiometry may be independently adjusted based on the fuel-firing rate to ensure complete combustion in the tailpipes 314, 354 or acoustic chambers 311, 351. Furthermore, tempering air and/or recycle flue gas may be supplied to the acoustic chambers 311, 351 to regulate the temperature of the gases entering the heat transfer tubes 326, 366 and/or minimize pollutant emissions. Furthermore, the geometry of the pulse combustors 312, 352 with their associated chambers 313, 353, tailpipes 314, 354 and valves 320, 360 can be designed to maximize combustion and acoustic performance while the heat transfer bundle (shield tube diameter and length, outer tube diameter and length and tube-tube spacing or gap in the bundle) can be designed for optimum heat transfer performance and fluid bed operability. In this manner, the pulse combustors may be operated to provide a controlled amount of heat to the heat transfer tubes to process the reactive material introduced into the reformer vessel 302. Persons having ordinary skill in the art of fluid bed operation are familiar with controlling the reformer 300, pulse combustors 312, 352, feedstock, and fluidization medium. Accordingly, through such control, and depending on the material being processed, the reformer 300 may selectively be operated in either the bubbling bed regime or in the turbulent fluidization regime.

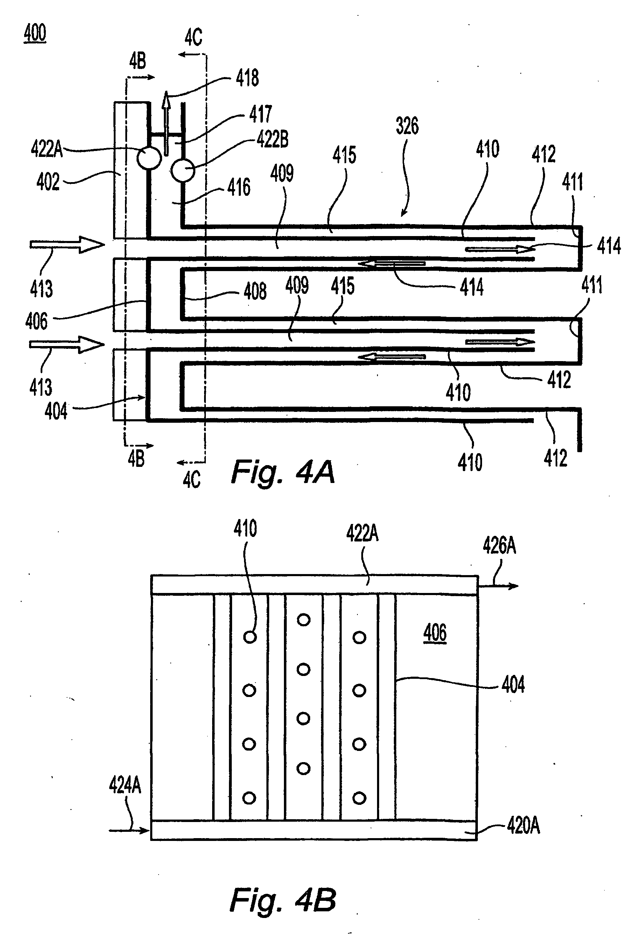

Fig. 4A shows a cutaway view of a first embodiment of a first wall section 400 belonging to a wall 332 between the first acoustic chamber 311 and the reformer vessel 302. The first wall section 400 comprises a tube sheet 406, which may itself comprise a refractory-type material 402 facing the first acoustic chamber 311. In this embodiment, the wall section 400 comprises a pair of tube sheets 406, 408 which together form an annular membrane wall 404 interrupted by inwardly protruding heat transfer tubes.

Each heat transfer tube 326, 328 has an annular design, and comprises an inner shield tube 410 and a slightly longer outer tube 412 ("fluid bed heat transfer tube") defining an annulus therebetween. The inner tube sheet 406 (which actually is the outermost tube sheet, relative to the reformer vessel 302) supports the inner shield tubes 410 belonging to a bundle. Meanwhile the outer tube sheet 408 (which actually is the innermost tube sheet, relative to the reformer vessel 302) supports the outer tubes 412 belonging to a bundle. In one embodiment, the outer tube sheet 408 is either welded to the vessel wall 332 at predetermined locations, or bolted thereto through a flange connection. Similarly, the inner tube sheet 406 is also flanged and bolted to a decoupler portion adjacent to the vessel wall 332.

The combustion products, such as flue gas emitted from a tailpipe, flow from the acoustic chamber into the inner shield tube 410, as depicted by arrows 413. The flue gas first travels in a direction away from the wall 332, along a first channel 409 comprising the hollow center of the inner shield tube 410 and towards the end wall 411 of the heat transfer tube. The flue gas then turns around, and flows in a direction towards the wall 332 through a second channel 415 defined by an annulus formed between the inner and other shield tubes 410, 412, as indicated by arrow 414. The second channel 415 is in fluid communication with a manifold 416 formed between two tube sheets 406, 408. Therefore, from the second channel 415, the flue gas enters the manifold 416, from whence it is directed towards a flue gas duct 417, as indicated by arrow 418.

As they travel down the inner shield tube 410, the flue gases therein warm the gases going in the opposite direction within the annular region between inner and outer shield tubes 410, 412, respectively. The flue gases in the annulus tend to cool down as they flow from the inlet of the annulus due to heat transfer to the fluid bed, but are somewhat reheated by heat transfer from the flue gases in the inner shield tube 410.

This arrangement may eliminate the need for thermal expansion joints within the reformer vessel and the associated capital, operating and maintenance costs. Furthermore, the shield tube-annulus design promotes near uniform gas temperature on the outer surface of the outer tube 412, thus reducing the potential for local hot spots on the outer tube 412. It also helps enhance heat transfer to the fluid bed within the reformer vessel. In one embodiment, the cross-section and length of the tubes 410 and 412 are selected such that the heat transfer bundle and the corresponding portion of the acoustic chamber operate as a Helmholtz and/or a quarter wave resonator.

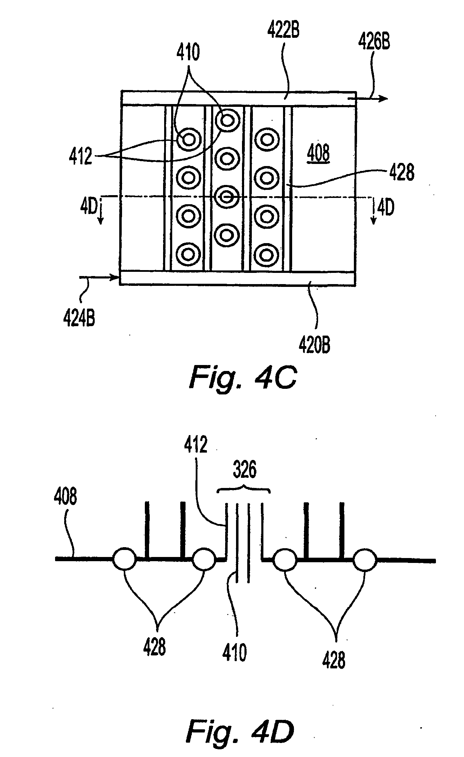

As seen in Figs. 4B, 4C & 4D, the tube sheets 406, 408 may be water-cooled, employing a membrane wall construction. The outer tube sheet 406 supports an inlet header 420A that is vertically spaced apart from an outlet header 422A. Water 424A is pumped into the inlet header 420A, travels upward through a plurality of cooling tubes 404 and enters the outlet header 422A. A water/steam mixture 426A then exits from this outlet header 422A. Similarly, the inner tube sheet 408 supports an inlet header 420B that is vertically spaced apart from an outlet header 422B. Water 424B is pumped into the inlet header 420B, travels upward through a plurality of cooling tubes 428 and enters the outlet header 422B. A water/steam mixture 426B then exits from this outlet header 422B.

It is understood that, in some embodiments, at least two such wall sections 400 would be provided for acoustic chamber 311, one associated with the lower set of heat transfer tubes, and another associated with the upper set of heat transfer tubes. It is further understood that in a reformer 304 of the sort seen in Fig. 3, each acoustic chamber 311, 351, would have two such wall sections associated therewith, two associated with wall 332 and two others associated with wall 334, for a total of four such wall sections in all.

It is further understood that wall 334 has a similar wall section and so both heat transfer modules 310, 350 pass their flue gases on to the common reaction vessel.

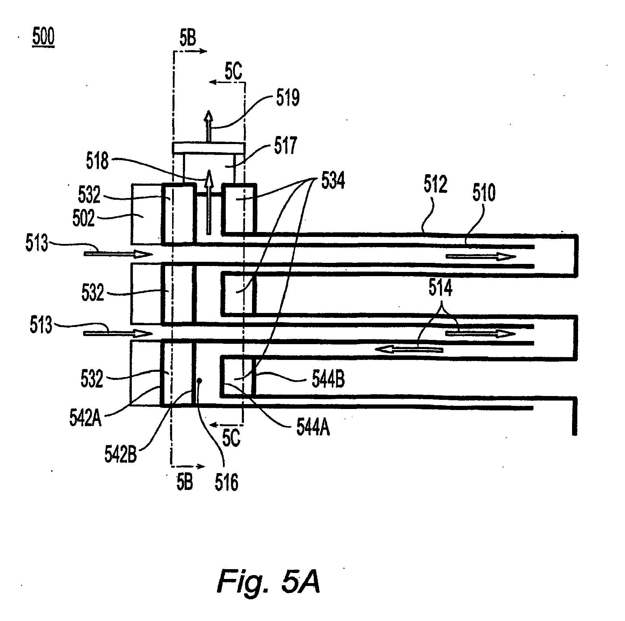

Fig. 5A shows a cutaway view of a second embodiment of a wall section 500 belonging to a wall 332 between the first acoustic chamber 311 and the reformer vessel 302. The wall section 500 comprises a first water jacket 532, which may comprise a refractory-type material 502, facing the acoustic chamber. Each of the heat transfer tubes comprises an inner shield tube 510 and a slightly longer outer tube 512 defining an annulus therebetween.

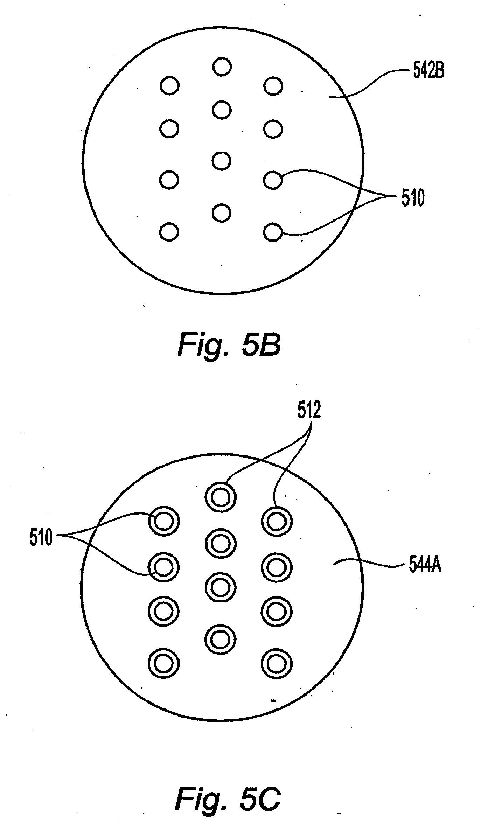

In this embodiment, a pair of water jackets 532, 534 surround the heat transfer tubes. First water jacket 532 is formed from a first pair of tube sheets 542A, 542B, while second water jacket 534 is formed from a second pair of tube sheets 544A, 544B. The inner shield tube water jacket 532 cools the inner shield tubes 510 of the bundle, while the outer tube water jacket 534 cools the outer tubes 512 of the bundle. As seen in the embodiment of Figs. 5B and 5C, the water jackets 532, 534 may have a circular face when viewed from the reformer vessel. The water jackets may instead have a rectangular face if the steam pressure is relatively low, or if their periphery can be reinforced adequately to comply with the pressure requirements of the reformer vessel.

In the embodiment of Fig. 5A, the combustion products, such as flue gas emitted from a tailpipe, flow from the acoustic chamber into the inner shield tube 510, as depicted by arrows 513. The flue gas travels along the inner shield tube 510 to its end, turns around, and flows through the outer annulus, as indicated by arrow 514. The flue gas then enters a manifold 516 formed between the two water jackets 532, 534. From the manifold, the flue gas is directed towards a flue gas duct 517 as indicated by arrow 518, and from there exits the reformer vessel, as indicated by arrow 519.

In the foregoing sketches, pulse combustors 312, 352 are shown with single valves 320, 360, respectively, and single tailpipes 314, 354, respectively. It is understood, however, that the pulse combustors 312, 352 may each comprise a plurality of such valves and/or a plurality of tailpipes, as necessary.

The reformer may be configured to operate in a turbulent fluidization regime, and the fluidization medium may consist of one from the group of steam, air, enriched air, oxygen, nitrogen, carbon dioxide, recycle product gas, and mixtures thereof.

In addition, while the above description is framed in the context of energy conversion and syngas production, it should be noted that the disclosed reactor 300 may also be gainfully employed for processing any reactive material using thermochemical and/or biochemical approaches. Reactive materials that are contemplated here include not only carbonaceous materials, but also inorganics, among others. It is understood that persons having ordinary skill in the art of fluid bed operation are familiar with controlling the reactor, pulse combustors, feedstock inlets and fluidization medium to thermochemically or biochemically process a whole host of different reactive materials.

## Claims

1. A fluid bed reactor (600) configured to thermochemically or biochemically process a reactive material, the reactor comprising:
a reaction vessel (602) defining a compartment (601) suitable for receiving a reactive material;
a first cluster (610) of heating conduits (609) at least partially occupying said compartment (601 and extending over a first vertical extent (V1) within the compartment (601), each heating conduit (609) in the first cluster (610) configured to transfer heat from a heat source to the compartment (601), the heating conduits (609) in the first cluster (610) having a first thickness (T1);
a second cluster (620) of heating conduits at least partially occupying said compartment (601) and extending over a second vertical extent (V2) within the compartment (601), each heating conduit in the second cluster (620) configured to transfer heat from a heat source to the compartment (601), the heating conduits in the second cluster (620) having a second thickness (T2), the second cluster (620) of heating conduits being positioned vertically above the first cluster (610) of heating conduits (609) and spaced apart therefrom by a first separation distance (S1), the first separation distance (S1) being at least as large as the smaller ofthe first and second thicknesses (T1, T2), the first separation distance (S1) defining a zone in the reaction vessel (602) between the first cluster (610) and the second cluster (620) that is configured to be conducive to good solids circulation; and
a plurality of feedstock inlets (637) configured to introduce a reactive material into the reaction vessel (602) in a region that is vertically between the first and second clusters (610, 620) of heating conduits (609);
**characterized in that** each heating conduit of said first and second clusters (610, 620) is a resonance tube (609) of a respective one of a plurality of pulse heaters (608A, 608B), or electric heaters are within the heating conduits.

2. A fluid bed reactor (600) according to claim 1, wherein the first separation distance (S1) is at least as large as the smaller of the first and second vertical extents (V1, V2).

3. A fluid bed reactor according to claim 2, wherein the first separation distance (S1) is at least twice as large as the smaller of the first and second vertical extents (V1, V2).

4. A fluid bed reactor (600) according to claim 1, wherein at least one (620) of the first and second clusters (610, 620) of heating conduits (609) comprises two (614A, 614B) or more rows of heating conduits.

5. A fluid bed reactor (600) according to claim 4, wherein, within the at least one (620) of the first and second clusters (610, 620), adjacent rows (614A, 614B) of heating conduits are staggered.

6. A fluid bed reactor (600) according to claim 1, wherein both the first and second clusters of heating conduits comprise two or more rows of heating conduits.

7. A fluid bed reactor (600) according to claim 6, wherein, within each cluster, adjacent rows of heating conduits are staggered.

8. A method of thermochemically or biochemically processing a reactive material to form a product, the method comprising:
providing a fluid bed reactor (600) comprising:
a reaction vessel (602) defining a compartment (601) suitable for receiving a reactive material;
a first cluster (610) of heating conduits (609) at least partially occupying said compartment (601) and extending over a first vertical extent (V1) within the compartment (601), each heating conduit (609) in the first cluster (610) configured to transfer heat from a heat source to the compartment (601), the heating conduits (609) in the first cluster (610) having a first thickness (T1); and
a second cluster (620) of heating conduits at least partially occupying said compartment (601) and extending over a second vertical extent (V2) within the compartment (601), each heating conduit in the second cluster (620) configured to transfer heat from a heat source to the compartment (601), the heating conduits in the second cluster (620) having a second thickness (T2), the second cluster (620) of heating conduits being positioned vertically above the first cluster (610) of heating conduits (609) and spaced apart therefrom by a first separation distance (S1), the first separation distance (S1) being at least as large as the smaller of the first and second thicknesses (T1, T2), the first separation distance (S1) defining a zone in the reaction vessel (602) between the first cluster (610) and the second cluster (620) that is configured to be conducive to good solids circulation;
introducing a fluidization medium into the compartment (601);
introducing reactive material into the compartment (601) in a region that is vertically between the first and second clusters (610), 620) of heating conduits (609); and
controlling a reaction in the reaction vessel (602) such that at least a portion of the reactive material is converted into one or more products in a fluidized bed;
**characterized by**
providing the reaction vessel (602) with a plurality of pulse heaters (608A, 608B), each pulse heater (608A, 608B) including a resonance tube (609) which serves as a respective one of said heating conduits; and wherein
controlling a reaction in the reaction vessel (602) comprises controlling operation of said pulse heaters (608A, 608B).

9. A method according to claim 8, wherein the reaction vessel (602) is operated in a turbulent fluidization regime.

10. A method according to claim 9, wherein the fluidization medium is one from the group consisting of steam, air, enriched air, oxygen, nitrogen, carbon dioxide, recycle product gas, and mixtures thereof.

## Patentansprüche

1. Wirbelbettreaktor (600), der konfiguriert ist, um ein reaktionsfähiges Material thermochemisch oder biochemisch zu verarbeiten, wobei der Reaktor umfasst:
ein Reaktionsgefäß (602), das eine Kammer (601) begrenzt, die zum Aufnehmen eines reaktionsfähigen Materials geeignet ist;
eine erste Ansammlung (610) von Heizrohren (609), die die Kammer (601) zumindest teilweise besetzen und sich über ein erstes vertikales Ausmaß (V1) in der Kammer (601) erstrecken, wobei jedes Heizrohr (609) in der ersten Ansammlung (610) konfiguriert ist, um Wärme von einer Wärmequelle auf die Kammer (601) zu übertragen, wobei die Heizrohre (609) in der ersten Ansammlung (610) eine erste Dicke (T1) haben;
eine zweite Ansammlung (620) von Heizrohren, die die Kammer (601) zumindest teilweise besetzen und sich über ein zweites vertikales Ausmaß (V2) in der Kammer (601) erstrecken, wobei jedes Heizrohr in der zweiten Ansammlung (620) konfiguriert ist, um Wärme von einer Wärmequelle auf die Kammer (601) zu übertragen, wobei die Heizrohre in der zweiten Ansammlung (620) eine zweite Dicke (T2) haben, wobei die zweite Ansammlung (620) von Heizrohren vertikal über der ersten Ansammlung (610) von Heizrohren (609) angeordnet und davon um einen ersten Trennungsabstand (S1) beabstandet ist, wobei der erste Trennungsabstand (S1) mindestens so groß ist wie die kleinere der ersten und zweiten Dicke (T1, T2), wobei der erste Trennungsabstand (S1) eine zone in dem Reaktionsgefäß (602) zwischen der ersten Ansammlung (610) und der zweiten Ansammlung (620) bildet, die konfiguriert ist, um für eine gute Feststoffzirkulation förderlich zu sein; und
eine Vielzahl von Rohstoffeinlässen (637), die konfiguriert sind, um ein reaktionsfähiges Material in das Reaktionsgefäß (602) in einem Bereich einzuführen, der vertikal zwischen der ersten und zweiten Ansammlung (610, 620) von Heizrohren (609) ist;
**dadurch gekennzeichnet, dass** jedes Heizrohr der ersten und zweiten Ansammlung (610, 620) ein Resonanzrohr (609) eines jeweiligen Pulsbrenners einer Vielzahl von Pulsbrennern (608A, 608B) ist, oder elektrische Heizvorrichtungen in den Heizrohren sind.

2. Wirbelbettreaktor (600) nach Anspruch 1, bei dem der erste Trennungsabstand (S1) mindestens so groß wie das kleinere des ersten und zweiten vertikalen Ausmaßes (V1, V2) ist.

3. Wirbelbettreaktor nach Anspruch 2, bei dem der erste Trennungsabstand (S1) mindestens zweimal so groß wie der kleinere des ersten und zweiten vertikalen Ausmaßes (V1, V2) ist.

4. Wirbelbettreaktor (600) nach Anspruch 1, bei dem mindestens eine (620) der ersten und zweiten Ansammlung (610, 620) von Heizrohren (609) zwei (614A, 614B) oder mehr Reihen von Heizrohren umfasst.

5. Wirbelbettreaktor (600) nach Anspruch 4, bei dem in der mindestens einen (620) der ersten und zweiten Ansammlung (610, 620) benachbarte Reihen (614A, 614B) von Heizrohren versetzt angeordnet sind.

6. Wirbelbettreaktor (600) nach Anspruch 1, bei dem sowohl die erste als auch die zweite Ansammlung von Heizrohren zwei oder mehr Reihen von Heizrohren umfassen.

7. Wirbelbettreaktor (600) nach Anspruch 6, bei dem in jeder Ansammlung benachbarte Reihen von Heizrohren versetzt angeordnet sind.

8. Verfahren zum thermochemischen oder biochemischen Verarbeiten eines reaktionsfähigen Materials zum Herstellen eines Produktes, wobei das Verfahren umfasst:
Bereitstellen eines Wirbelbettreaktors (600), der umfasst:
ein Reaktionsgefäß (602), das eine Kammer (601) begrenzt, die zum Aufnehmen eines reaktionsfähigen Materials geeignet ist;
eine erste Ansammlung (610) von Heizrohren (609), die die Kammer (601) zumindest teilweise besetzen und sich über ein erstes vertikales Ausmaß (V1) in der Kammer (601) erstrecken, wobei jedes Heizrohr (609) in der ersten Ansammlung (610) konfiguriert ist, um Wärme von einer Wärmequelle auf die Kammer (601) zu übertragen, wobei die Heizrohre (609) in der ersten Ansammlung (610) eine erste Dicke (T1) haben; und
eine zweite Ansammlung (620) von Heizrohren, die die Kammer (601) zumindest teilweise besetzen und sich über ein zweites vertikales Ausmaß (V2) in der Kammer (601) erstrecken, wobei jedes Heizrohr in der zweiten Ansammlung (620) konfiguriert ist, um Wärme von einer Wärmequelle auf die Kammer (601) zu übertragen, wobei die Heizrohre in der zweiten Ansammlung (620) eine zweite Dicke (T2) haben, wobei die zweite Ansammlung (620) von Heizrohren vertikal über der ersten Ansammlung (610) von Heizrohren (609) angeordnet und davon um einen ersten Trennungsabstand (S1) beabstandet ist, wobei der erste Trennungsabstand (S1) mindestens so groß ist wie die kleinere der ersten und zweiten Dicke (T1, T2), wobei der erste Trennungsabstand (S1) eine Zone in dem Reaktionsgefäß (602) zwischen der ersten Ansammlung (610) und der zweiten Ansammlung (620) bildet, die konfiguriert ist, um für eine gute Feststoffzirkulation förderlich zu sein;
Einführen eines Fluidisiermittels in die Kammer (601) ;
Einführen eines reaktionsfähigen Materials in die Kammer (601) in einem Bereich, der vertikal zwischen der ersten und zweiten Ansammlung (610, 620) von Heizrohren (609) ist; und
Steuern einer Reaktion in dem Reaktionsgefäß (602) derart, dass mindestens ein Teil des reaktionsfähigen Materials in ein oder mehrere Produkte in einem Wirbelbett umgewandelt wird;
**gekennzeichnet durch**
Versehen des Reaktionsgefäßes (602) mit einer Vielzahl von Pulsbrennern (608A, 608B), wobei jeder Pulsbrenner (608A, 508B) ein Resonanzrohr (609) enthält, das als ein jeweiliges Heizrohr der Heizrohre dient; und wobei
das Steuern einer Reaktion in dem Reaktionsgefäß (602) das Steuern des Betriebs der Pulsbrenner (608A, 608B) umfasst.

9. Verfahren nach Anspruch 8, bei dem das Reaktionsgefäß (602) in einem turbulenten Fluidisierregime betrieben wird.

10. Verfahren nach Anspruch 9, bei dem das Fluidisiermittel eines aus der Gruppe ist, die besteht aus Dampf, Luft, angereicherter Luft, Sauerstoff, Stickstoff, Rohlendioxid, Recycle-Produktgas und daraus bestehenden Mischungen.

## Revendications

1. Réacteur à lit fluidisé (600) configuré pour traiter de manière thermochimique ou biochimique un matériau réactif, le réacteur comprenant :
une enceinte de réaction (602) définissant un compartiment (601) approprié pour recevoir un matériau réactif ;
un premier faisceau (610) de conduits chauffants (609) occupant au moins partiellement ledit compartiment (601) et s'étendant sur une première extension verticale (V1) à l'intérieur du compartiment (601), chaque conduit chauffant (609) dans le premier faisceau (610) étant configuré pour transférer de la chaleur depuis une source de chaleur vers le compartiment (601), les conduits chauffants (609) dans le premier faisceau (610) ayant une première épaisseur (T1) ;
un second faisceau (620) de conduits chauffants occupant au moins partiellement ledit compartiment (601) et s'étendant sur une seconde extension verticale (V2) à l'intérieur du compartiment (601), chaque conduit chauffant dans le second faisceau (620) étant configuré pour transférer de la chaleur depuis une source de chaleur vers le compartiment (601), les conduits chauffants dans le second faisceau (620) ayant une seconde épaisseur (P2), le second faisceau (620) de conduits chauffants étant positionné verticalement au-dessus du premier faisceau (610) de conduits chauffants (609) et espacé de celui-ci d'une première distance de séparation (S1), la première distance de séparation (S1) étant au moins aussi grande que la plus petite de la première et de la seconde épaisseur (T1, T2), la première distance de séparation (S1) définissant une zone dans l'enceinte de réaction (602) entre le premier faisceau (610) et le second faisceau (620) qui est configurée pour conduire une bonne circulation de matières solides ; et
une pluralité d'entrée de matières premières (637) configurée pour introduire un matériau réactif dans l'enceinte de réaction (602) dans une région qui est verticalement entre le premier et le second faisceau (610, 620) de conduits chauffants (609) ;
**caractérisé en ce que** chaque conduit chauffant dudit premier et dudit second faisceau (610, 620) est un tube résonateur (609) d'un dispositif respectif parmi une pluralité de dispositifs chauffants pulsés (608A, 608B), ou des dispositifs chauffants électriques se trouvent à l'intérieur des conduits chauffants.

2. Réacteur à lit fluidisé (600) selon la revendication 1, dans lequel la première distance de séparation (S1) est au moins aussi grande que la plus petite de la première et de la seconde extension verticale (V1, V2).

3. Réacteur à lit fluidisé selon la revendication 2, dans lequel la première distance de séparation (S1) est au moins deux fois plus grande que la plus petite de la première et de la seconde extension verticale (V1, V2).

4. Réacteur à lit fluidisé (600) selon la revendication 1, dans lequel au moins un faisceau (620) du premier et du second faisceau (610, 620) de conduits chauffants (609) comprend deux rangées (614A, 614B) ou plusieurs rangées de conduits chauffants.

5. Réacteur à lit fluidisé (600) selon la revendication 4, dans lequel, à l'intérieur d'au moins un faisceau (620) parmi le premier et le second faisceau (610, 620), des rangées adjacentes (614A, 614B) de conduits chauffants sont étagées.

6. Réacteur à lit fluidisé (600) selon la revendication 1, dans lequel le premier et le second faisceau de conduits chauffants comprennent tous les deux deux ou plusieurs rangées de conduits chauffants.

7. Réacteur à lit fluidisé (600) selon la revendication 6, dans lequel, dans chaque faisceau, des rangées adjacentes de conduits chauffants sont étagées.

8. Procédé pour traiter de manière thermochimique ou biochimique un matériau réactif pour former un produit, le procédé comprenant les étapes consistant à :
fournir un réacteur à lit fluidisé (600) comprenant :
une enceinte de réaction (602) définissant un compartiment (601) approprié pour recevoir un matériau réactif ;
un premier faisceau (610) de conduits chauffants (609) occupant au moins partiellement ledit compartiment (601) et s'étendant sur une première extension verticale (V1) à l'intérieur du compartiment (601), chaque conduit chauffant (609) dans le premier faisceau (610) étant configuré pour transférer de la chaleur depuis une source de chaleur vers le compartiment (601), les conduits chauffants (609) dans le premier faisceau (610) ayant une première épaisseur (T1) ; et
un second faisceau (620) de conduits chauffants occupant au moins partiellement ledit compartiment (601) et s'étendant sur une seconde extension verticale (V2) à l'intérieur du compartiment (601), chaque conduit chauffant dans le second faisceau (620) étant configuré pour transférer de la chaleur depuis une source de chaleur vers le compartiment (601), les conduits chauffants dans le second faisceau (620) ayant une seconde épaisseur (T2), le second faisceau (620) de conduits chauffants étant positionné verticalement au-dessus du premier faisceau (610) de conduits chauffants (609) et espacé de celui-ci d'une première distance de séparation (S1), la première distance de séparation (S1) étant au moins aussi grande que la plus petite de la première et de la seconde épaisseur (T1, T2), la première distance de séparation (S1) définissant une zone dans l'enceinte de réaction (602) entre le premier faisceau (610) et le second faisceau (620) qui est configurée pour conduire une bonne circulation de matières solides ;
introduire un milieu de fluidification dans le compartiment (601) ; introduire un matériau réactif dans le compartiment (601) dans une région qui est verticalement entre le premier et le second faisceau (610, 620) de conduits chauffants (609) ; et
contrôler une réaction dans l'enceinte de réaction (602) de telle façon qu'au moins une portion du matériau réactif est convertie en un ou plusieurs produits dans un lit fluidisé ;
**caractérisé par** les étapes consistant à
doter l'enceinte de réaction (602) d'une pluralité de dispositifs chauffants pulsés (608A, 608B), chaque dispositif chauffants pulsé (608A, 608B) incluant un tube résonateur (609) qui sert à titre de conduit respectif desdits conduits chauffants ; et dans lequel le contrôle d'une réaction dans l'enceinte de réaction (602) comprend de contrôler le fonctionnement desdits dispositifs chauffants pulsés (608A, 608B).

9. Procédé selon la revendication 8, dans lequel l'enceinte de réaction (602) est amenée à fonctionner dans un régime de fluidifcation turbulent.

10. Procédé selon la revendication 9, dans lequel le milieu de fluidification est un milieu choisi parmi le groupe comprenant vapeur, air, air enrichi, oxygène, azote, dioxyde de carbone, gaz de produits de recyclage, et leurs mélanges.
